# EUROPEAN PATENT APPLICATION

(11) **EP 3 539 429 A1**
(43) Date of publication of application: **18.09.2019**
(21) Application number: 18161626.9
(22) Date of filing: 13.03.2018
(51) Int. Cl.: A47J 37/07

(54) **BARBECUE WITH MECHANISM FOR HEIGHT ADJUSTMENT OF THE COAL GRATE**

(71) Applicant: Ovars B.V., 7004 BP Doetinchem (NL)
(72) Inventor: THIJSSEN, Dave Gerardus Theodorus, 7004 BP Doetinchem (NL)
(74) Representative: Plaggenborg, Menko Bernard

(57) **Abstract**

The invention relates to a barbecue, comprising a housing with a carrying surface for carrying combustible material and a grill for carrying food to be prepared, characterized in that the barbecue further comprises an elevator mechanism for vertically displacing said carrying surface.

A preferred embodiment comprises a barbecue, the housing comprising side walls vertically extending from a bottom, defining an inner space for containing the carrying surface for carrying combustible material and the grill for carrying food to be prepared, a lid being movably connected to the housing for providing an opening for accessing the internal space, the grill being accessible through said opening, wherein the elevator mechanism comprises a cable connected at one end to the carrying surface and at another end to a reel, said reel being operably connected to a winding mechanism, such that rotating said reel moves the carrying surface between two end positions.

## Description

The present invention relates to a barbecue according to the preamble of claim 1.

It is known in the art to grill food material in a barbecue by placing it on a grill element, heating and preparing the food by hot coal below the grill element.

Such known barbecue provides the advantage that food is prepared yielding a unique flavor. The flavor may even be enhanced by adding wood chops.

A disadvantage of barbecues is that many people are not able to evenly prepare the food on the grill. Some parts are still raw whereas other parts are charred.

The invention aims at providing an improved barbecue of the kind mentioned in the preamble.

The invention further aims at providing a barbecue that solves the problem of charred and raw food.

So as to obtain at least one of the above mentioned aims, the invention provides a barbecue as mentioned in claim 1. This barbecue has the advantage that all food is well prepared. More in particular, the present invention provides the surprising advantage that the temperature at the grill can be controlled accurately.

It has also shown that the barbecue according to the present invention provides the advantage that it can be used by any user, experienced or a complete newbie, for slow cooking and normal barbecuing. Such synergistic effect is a surprising and advantageous effect.

The invention therefore relates to a a barbecue, comprising a housing with a carrying surface for carrying combustible material and a grill for carrying food to be prepared, characterized in that the barbecue further comprises an elevator mechanism for vertically displacing said carrying surface. By placing the hot coals close to the food a fast heating will be obtained, at a high temperature. Such is ideal for roasting food material. After a short time of roasting, the carrying surface with the hot coals could be lowered so as to obtain a lower temperature at the grill, ensuring an evenly prepared food material.

The barbecue according to the invention may comprise an indicator at an outer surface for indicating the position of the carrying surface. A user can thus see at which position the carrying surface is set. However, a more experienced user might prefer to check the temperature inside the barbecue. In such case, the barbecue according to the invention preferably comprises a temperature indicator at an outer surface for indicating the temperature at the grill. Of course, further temperature indicators may be provided at other positions, for example at a highest position inside the barbecue or at a position below the grill, on the contrary.

The carrying surface may be moved upward and downward by any suitable means. Preferably, the elevator mechanism comprises a cable connected at one end to the carrying surface and at another end to a reel, said reel being operably connected to a manual or automated winding mechanism, such that rotating said reel moves the carrying surface between two end positions. Such mechanism provides an easy way of moving the carrying surface. Also, a counter on the winding mechanism can easily indicate the vertical position of the carrying surface inside the housing.

Hence, the present invention relates to a barbecue wherein preferably a first end position is relatively close below the grill and a second end position is relatively further away below the grill.

It is especially preferred that the carrying surface has a vertical displacement trajectory of at least 30 cm, preferably at least 50 cm, more preferably at least 70 cm, and preferably less than 120 cm, more preferably less than 100 cm.

A barbecue with a more versatile application is obtained when the carrying surface for carrying combustible material is comprised of at least two sections, a division being provided between each different section. In such embodiment, only one section may comprise coal which is especially suitable when a small amount of food is to be prepared, or where for example meat is to be prepared which requires a long time to fully cook whereas the other section is used for preparing fish or vegetables which requires less time, such that said other section can be ignited at a later time. Such saves coal. It is also preferred, that the temperature above each section is indicated by means of separate temperature indicators at the grill.

Intake of fresh air can be controlled by an air intake provided in the housing at a position below the carrying surface.

When food is to be smoked, it is preferred that the housing is provided with a supply opening for adding combustible material, for example coal, charcoal or wood, to the housing's interior, preferably to the carrying surface. Then, the barbecue as such can be kept closed, allowing for a substantially constant temperature in the housing.

A further advantageous embodiment is obtained when the winding mechanism is operable from the outside of the housing. This also allows for a control of the temperature at the grill, while keeping the housing closed. This is a huge advantage over a mechanism where the distance between the grill and the carrying surface is to be modified by moving the grill at another vertical position.

So as to ensure that the carrying surface maintains a constant vertical position, it is preferred that the winding mechanism comprises a roll-off protection for preventing unwinding of the reel. The protection could be embodied as a lock coupled to the housing and interacting with the reel.

For example, the winding mechanism could comprise a manually operable wheel with an axis connected to the reel, the axis comprising circumferentially provided flattened surfaces for receiving a stop cam for preventing a rotary movement of said axis.

The invention preferably relates to a barbecue, the housing comprising side walls vertically extending from a bottom, defining an inner space for containing the carrying surface for carrying combustible material and the grill for carrying food to be prepared, a lid being movably connected to the housing for providing an opening for accessing the internal space, the grill being accessible through said opening. In such preferred embodiment, the elevator mechanism may comprise a cable connected at one end to the carrying surface and at another end to a reel, said reel being operably connected to a winding mechanism, such that rotating said reel moves the carrying surface between two end positions.

In the present description, the term "between two end positions" means that the carrying surface can be displaced between any two positions, i.e. between a relatively low position and a relatively high position, each of which does not necessarily coincide with any of the two end positions.

As indicated before, it is preferred that the winding mechanism is operable from the outside of the housing.

Hereafter, the invention will be further described by means of a drawing. The drawing shows in:
Fig. 1 and 2 an exemplary embodiment of the invention in a closed and an open position,
Fig. 3 and 4 sectional views from the side and back, respectively of the barbecue of the invention, and
Fig. 5 and 6 detail views of the winding mechanism.

The same and similar parts and features have been denoted by the same reference numerals in the figures. However, for ease of understanding the figures, not all parts that are required for a practical embodiment have been shown in the figures.

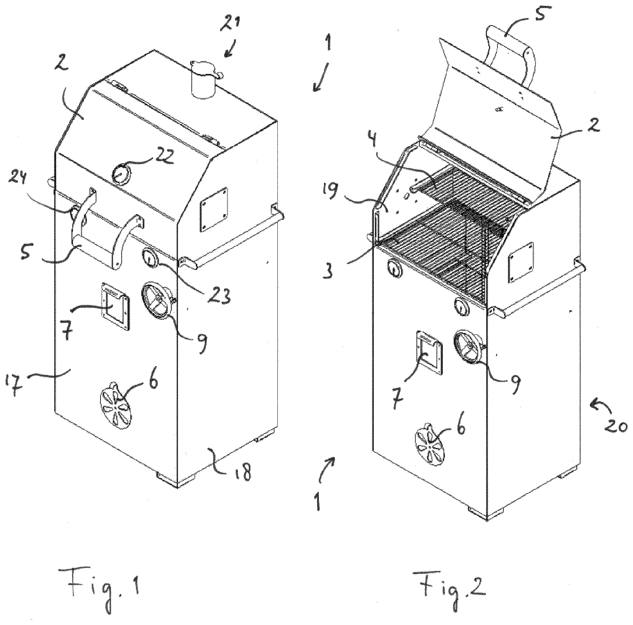

Fig. 1 and Fig. 2 show a perspective view of the barbecue 1 according to the invention. In Fig. 1 the barbecue 1 is in a fully closed position, whereas Fig. 2 shows the lid 2 in an opened position, such that access to the grills 3, 4 is provided. A user may take prepared food (not shown) from the grill 3, 4, flip it over or position raw food to be prepared thereon. Fig. 1 and 2 also show a handle 5 for operating the lid. An air intake 6 is provided that may be closed, for controlling an amount of ambient air to enter the inner space of the barbecue 1. An entrance opening (closed off by a lid 7) for inserting coal or other combustible material into the barbecue is shown as well. Finally, a chimney 21 is provided at a highest position for removing gases and smoke from the barbecue's inner space.

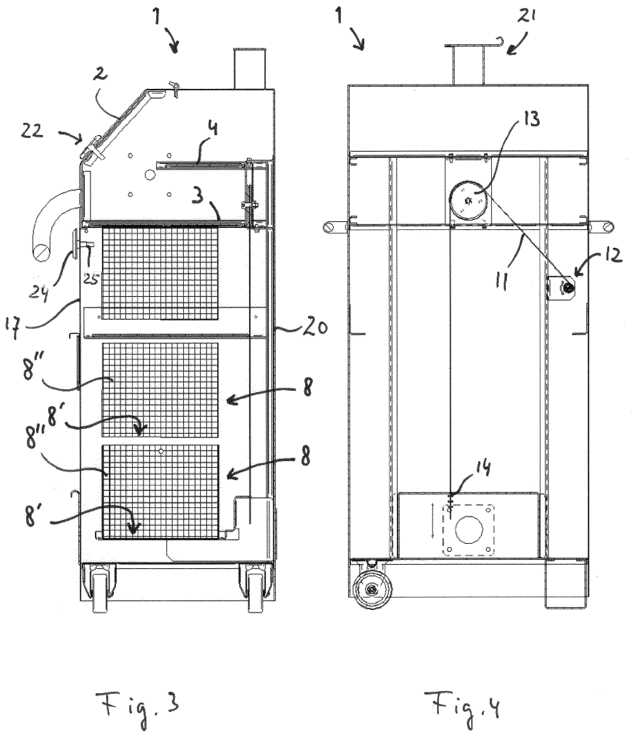

Fig. 3 and 4 show sectional views from the side and back, respectively of the barbecue 1 according to the invention. The inner space of the housing is clearly shown, comprising the grills 3, 4 and a basket 8 for carrying combustible material, like coals (not shown). The basket 8 has a carrying surface 8' for carrying combustible material. The height of the walls 8" of the basket 8 may be lower than shown in this drawing, depending on the amount of combustible material one would need for preparing food. A lower wall allows for a larger vertical displacement of the basket 8 and, thus, of the combustible material. As a consequence, the temperature range will be increased when the basket's walls are lower.

The basket 8 is shown at two different positions, each yielding a different temperature at the grill 3, 4 positions.

The winding mechanism for moving the basket 8 upwards or downwards comprises a wheel 9 connected to an axis 10. The axis 10 is connected to a reel 12. A first end of a cable 11 is connected to the reel. The other end of the cable is connected to a connection member 14 of the basket 8, such that rotating the wheel 9 moves the basket 8 upwards or downwards, depending on the rotation direction of the wheel 9. Fig. 4 shows the inside of the housing of the barbecue 1. The winding mechanism is clearly recognizable. The axis 10 of the wheel 9 is connected to a reel 12, in the embodiment of Fig. 4 coaxially coupled to the axis 10. The cable 11 is guided along a pulley wheel 13. Guiding surfaces may be provided so as to ensure an even movement of the basket up and down inside the housing of the barbecue 1.

The grills 3, 4 are removable from the barbeque 1 such that a user may also remove the basket 8 with carrying surface 8' for the combustible material. For, the basket might require a regular cleaning to remove ash and the like. Also, if any debris is on the bottom of the barbeque, a user can easily clean the barbeque.

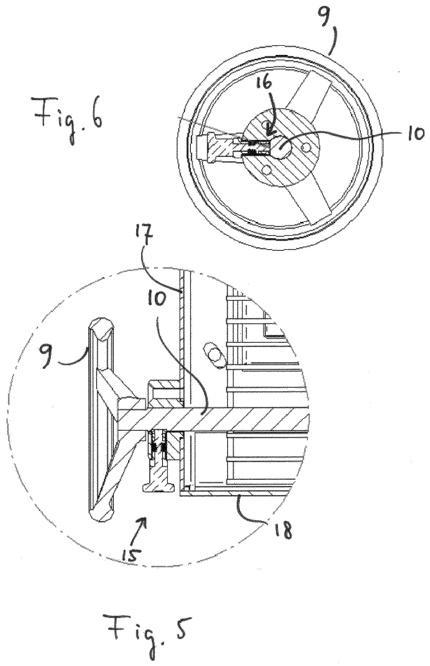

Fig. 5 shows a detailed view of part of the winding mechanism. The wheel 9 is connected to an axis 10. A spring loaded cam 16 interacts with a flattened surface of the axis 10, such that the axis 10 is prevented from a rotary movement, providing a roll-off protection 15. Unlocking the roll-off protection by withdrawing the spring loaded cam releases the axis 10 and thus the reel, allowing the basket to move upward or downward. As shown in Fig. 5, the roll-off protection is connected to a side wall 17 of the housing of the barbecue 1. Due to such roll off protection, the basket may be positioned at substantially any desired height. If a flattened surface is provide at a single position at the axis' circumference, the axis 10 may be secured at every rotary position of the axis, and as a consequence the basket 8 is secured at a plurality of vertical positions. Providing a plurality of flattened surfaces at the axis' circumference increases the number of vertical positions the basket can be secured. Of course, other embodiments for securing the axis may be applied, for example a toothed shaft and a cooperating cam engaging the valleys and/or tops of the toothed shaft. An automated elevating mechanism is applicable as well, for example controlled by a temperature sensor at the grill so as to keep a desired, for example a constant, temperature.

In addition to the front wall 17, the housing comprises side walls 18, 19 and a back wall 20. Thermometers 21, 22, 23 are provided. Each thermometer is provided with a scale part at the outside of the housing and a thermocouple part at the housing's inside.

Fig. 6 shows a detailed sectional view of the roll-off protection.

The invention is not limited to the embodiments as mentioned above and as shown in the drawings. The invention is limited by the claims only.

The invention also relates to all combinations of features described here independently of each other.

## Claims

1. A barbecue, comprising a housing with a carrying surface for carrying combustible material and a grill for carrying food to be prepared,
**characterized in that** the barbecue further comprises an elevator mechanism for vertically displacing said carrying surface.

2. A barbecue according to claim 1, comprising an indicator at an outer surface for indicating the position of the carrying surface.

3. A barbecue according to claim 1, comprising a temperature indicator at an outer surface for indicating the temperature at the grill.

4. A barbecue according to claim 1, wherein the elevator mechanism comprises a cable connected at one end to the carrying surface and at another end to a reel, said reel being operably connected to a manual or automated winding mechanism, such that rotating said reel moves the carrying surface between two end positions.

5. A barbecue according to claim 4, a first end position being relatively close below the grill and a second end position being relatively further away below the grill.

6. A barbecue according to claim 1, wherein the carrying surface has a vertical displacement trajectory of at least 30 cm, preferably at least 50 cm, more preferably at least 70 cm, and preferably less than 120 cm, more preferably less than 100 cm.

7. A barbecue according to claim 1, wherein the carrying surface for carrying combustible material is comprised of at least two sections, a division being provided between each different section.

8. A barbecue according to any of the preceding claims, wherein an air intake is provided in the housing at a position below the carrying surface.

9. A barbecue according to any of the preceding claims, wherein the housing is provided with a supply opening for adding combustible material, for example coal, charcoal or wood, to the housing's interior, preferably to the carrying surface.

10. A barbecue according to claim 4, wherein the winding mechanism is operable from the outside of the housing.

11. A barbecue according to claim 10, wherein the winding mechanism comprises a roll-off protection for preventing unwinding of the reel, for example embodied as a lock coupled to the housing and interacting with the reel.

12. A barbecue according to claim 4, wherein the winding mechanism comprises a manually operable wheel with an axis connected to the reel, the axis comprising circumferentially provided flattened surfaces for receiving a stop cam for preventing a rotary movement of said axis.

13. A barbecue according to any of the preceding claims, the housing comprising side walls vertically extending from a bottom, defining an inner space for containing the carrying surface for carrying combustible material and the grill for carrying food to be prepared, a lid being movably connected to the housing for providing an opening for accessing the internal space, the grill being accessible through said opening,
wherein the elevator mechanism comprises a cable connected at one end to the carrying surface and at another end to a reel, said reel being operably connected to a winding mechanism, such that rotating said reel moves the carrying surface between two end positions.

14. A barbecue according to claim 13, the winding mechanism being operable from the outside of the housing.
